# EUROPÄISCHE PATENTANMELDUNG

(11) **EP 1 056 117 A2**
(43) Veröffentlichungstag der Anmeldung: **29.11.2000**
(21) Anmeldenummer: 00108932.5
(22) Anmeldetag: 27.04.2000
(51) Int. Cl.: H01J 61/12

(54) **UV-Entladungslampe**

(30) Priorität: 04.05.1999 DE 19920579
(71) Anmelder: Heraeus Noblelight GmbH, 63450 Hanau (DE)
(72) Erfinder: Arnold, Erich, Dr., 55122 Mainz (DE)
(74) Vertreter: Kühn, Hans-Christian

(57) **Zusammenfassung**

Bei einer bekannten UV-Entladungslampe sind innerhalb eines ein Füllgas enthaltenden Entladungsraumes eine erste und eine zweite Elektrode mit elektrischen Anschlüssen versehen und beabstandet voneinander angeordnet, wobei unter Entladungsbedingungen die eine Elektrode als Anode und die andere Elektrode als Mikrohohlkathode wirkt. Um die bekannte Entladungslampe so weiterzubilden, daß sie bei kompakter Bauweise und gleichzeitig langer Lebensdauer für einen universellen Einsatz in der UV-Spektroskopie, beispielsweise für einen Einsatz in mobilen Spektrometern, geeignet ist, wird erfindungsgemäß vorgeschlagen, daß das Füllgas Deuterium enthält und daß der Partialdruck des Deuteriums im Füllgas mindestens 40 mbar beträgt.

## Beschreibung

Die vorliegende Erfindung betrifft eine UV-Entladungslampe, mit einem ein Füllgas enthaltenden Entladungsraum, in dem mit elektrischen Anschlüssen versehen und beabstandet voneinander eine erste und eine zweite Elektrode angeordnet sind, wobei unter Entladungsbedingungen die eine Elektrode als Anode und die andere Elektrode als Mikrohohlkathode wirkt.

Sogenannte Hohlkathodenlampen werden in Spektrometern zur Konzentrationsbestimmung von Gasen verwendet, die im Spektralbereich von 200 nm bis ca. 600 nm Absorptionsbanden aufweisen. Aus der DE-PS 25 46 565 ist beispielsweise ein Spektrometer für die Messung der Konzentration von Schwefeldioxid in einem Gasgemisch bekannt, das mit einer Gasentladungslampe in Form einer Hohlkathodenlampe versehen ist. Als Füllgas im Entladungsraum der Hohlkathodenlampe ist ein Stickstoff-Sauerstoff-Gemisch vorgesehen. Wegen ihrer Größe und wegen ihres hohen Energiebedarfes sind derartige Hohlkathodenlampen für einen Einsatz in mobilen Spektrometern nicht geeignet. Für Messungen im ultravioletten Wellenlängenbereich sind auch ortsfeste Standgeräte gebräuchlich, in denen UV-Lampen in Form von Quecksilberdampflampen oder Deuteriumlampen eingesetzt werden, die jedoch aufgrund ihrer Größe und für den Betrieb erforderlichen Energieversorgung für den Einsatz in mobilen Geräten ebenfalls nicht geeignet sind. Eine derartige Deuteriumlampe ist beispielsweise aus der EP-A1 685 874 beschrieben. In einem Hüllkolben aus Quarzglas ist eine Glühkathode vorgesehen, die durch thermische Anregung Elektronen emittiert. Der Abstand zwischen Kathode und Anode liegt typischerweise im Bereich von 1 cm; und der für die Zündung und den Betrieb der Deuteriumlampe erforderliche Fülldruck bei weniger als 20 mbar; in der EP-A1 685 874 werden beispielsweise Fülldrücke im Bereich weniger Torr angegebenen. Bei den bekannten Deuterium-Entladungslampen kommt es zum Effekt der Gasaufzehrung, der die Entladungsbedingungen beeinflußt und die Lebensdauer begrenzt.

Eine UV-Entladungslampe gemäß der eingangs bezeichneten Gattung ist in der EP-A1 732 719 beschrieben. Bei dieser sind innerhalb eines Entladungsraumes eine Anode und eine Kathode angeordnet, wobei die Kathode in Form einer sogenannten Mikrohohlkathode ausgebildet ist. Die Mikrohohlkathode ermöglicht eine kompakte Bauweise der Entladungslampe. Der Fülldruck im Entladungsraum liegt im Bereich zwischen 0,1 Torr und Atmosphärendruck, wobei je nach gewünschtem Spektrum der Entladung als Füllgase Edelgase, Halogene oder Quecksilber eingesetzt werden. In einem Ausführungsbeispiel besteht die Kathode aus einer geometrischen Anordnung von acht Mikrohohlkathoden, die der Anode in einem Abstand von 5 cm gegenüberliegen. Die Mikro-Hohlkathoden sind als Kavitäten in einer gemeinsamen Platte aus Molybdän ausgebildet, die mit einer Oberflächenschicht aus dielektrischem Material versehen ist. Die Kavitäten, die einen Durchmesser von 0,7 mm und eine Tiefe von 2 mm haben, sind in Richtung der Anode offen. Zwischen Anode und Kathode werden mittels einer Gleichspannungsquelle bei einer Stromstärke von 500 mA und einer Spannung von 350 V bis 375 V Glimmentladungen erzeugt, die innerhalb der Kavitäten ablaufen.

Die bekannte UV-Entladungslampe zeichnet sich aufgrund ihrer Ausbildung mit einer Mikrohohlkathode durch eine relativ kleine Bauhöhe aus. Sie ist jedoch für spektroskopische Anwendungen im ultravioletten Spektralbereich nicht universell einsetzbar.

Der Erfindung liegt daher die Aufgabe zugrunde, die bekannte Entladungslampe so weiterzubilden, daß sie bei kompakter Bauweise und gleichzeitig langer Lebensdauer für einen universellen Einsatz in der UV-Spektroskopie, beispielsweise für einen Einsatz in mobilen Spektrometern, geeignet ist.

Diese Aufgabe wird erfindungsgemäß dadurch gelöst, daß das Füllgas Deuterium enthält, und daß der Partialdruck des Deuteriums im Füllgas mindestens 40 mbar beträgt.

Mikrohohlkathoden zeichnen sich durch einen engen Hohlraum aus, in dem aufgrund des bekannten Hohlkathodeneffektes die Gasentladung abläuft. Bei Hohlräumen mit kreisförmigem Querschnitt liegt der "Kathodenlochradius" beispielsweise bei weniger als 1 mm, typischerweise bei weniger als 200 µm. Für eine Gasentladung infolge des Hohlkathodeneffektes ist es erforderlich, daß der "Kathodenlochradius" in der Größenordnung der mittleren freien Weglänge der Elektronen für die Gasionisation liegt. Der "Kathodenlochradius" bestimmt daher die Höhe des maximal möglichen anfänglichen Deuterium-Partialdruckes, der im folgenden als Kaltfülldruck bezeichnet wird. Da die mittlere freie Weglänge der Elektronen mit dem Deuterium-Partialdruck abnimmt, kann der Deuterium-Kaltfülldruck umso größer eingestellt werden, je kleiner der "Kathodenlochradius" ist. Somit ist bei der erfindungsgemäßen Entladungslampe möglich, einen hohen Partialdruck des Deuteriums im Füllgas einzustellen. Ein hoher anfänglichen Deuterium-Partialdruck im Bereich von 40 mbar bis 1 atm (1013 mbar) wirkt dem Effekt der Gasaufzehrung entgegen, so daß die erfindungsgemäße Deuterium-Entladungslampe sich durch eine lange Lebensdauer auszeichnet.

Darüberhinaus sind mit kleinen "Kathodenlochradien" hohe Strahlungsdichten erreichbar. Die erfindungsgemäße Deuterium-Entladungslampe kann mehrere als Kathode wirkende Elektroden und auch mehrere als Anode wirkende Elektroden aufweisen.

Das Spektrum von Deuteriumlampen weist im Wellenlängenbereich zwischen etwa 200 nm bis 350 nm ein Kontinuum auf. Da das Füllgas Deuterium enthält, emittiert die erfindungsgemäße Entladungslampe ein Lichtwellenspektrum, das dieses Kontinuum im ultravioletten Spektralbereich umfaßt. Dadurch wird ein universeller Einsatz der Entladungslampe für Messungen im ultravioletten Spektralbereich ermöglicht. Daneben können auch andere Füllgase enthalten sein.

Darüberhinaus ermöglicht es die Mikrohohlkathode die erfindungsgemäße Deuterium-Entladungslampe in kompakter Form und kleiner Bauhöhe auszubilden. Dadurch kann die Entladungslampe in mobilen, insbesondere in tragbaren Miniatur-Spektrometern für den ultravioletten Spektralbereich eingesetzt werden, die durch ihre Handlichkeit die Möglichkeit eines Vororteinsatzes erlauben.

Bevorzugt wird eine Ausführungsform der UV-Entladungslampe, bei der als Füllgas allein Deuterium verwendet wird. Das kontinuierliche Emissionsspektrum der Deuterium-Entladung gewährleistet eine stabile UV-Emission und erleichtert einen universellen Einsatz der erfindungsgemäßen Entladungslampe für analytische Messungen im ultravioletten Spektralbereich.

Besonders geeignet für einen mobilen Einsatz ist eine UV-Entladungslampe, deren elektrische Leistungsaufnahme 10 Watt oder weniger beträgt. Für den elektrischen Anschluß genügt eine erneuerbare, tragbare, handelsübliche Stromversorgungseinheit, beispielsweise eine Batterie oder ein sogenanntes Akku, wobei bei letzterem auch ein Anschluß für das Aufladen des Akkus oder ein direkter Netzanschluß über das Akku vorgesehen sein kann. Die geringe Leistungsaufnahme der Entladungslampe geht mit einer geringen Erwärmung beim Betrieb der Lampe, mit einer kleineren Verlustleistung und dementsprechend mit einer höheren Effizienz einher.

Als vorteilhaft hat es sich erwiesen, daß den Partialdruck des Deuteriums auf mindestens 100 mbar einzustellen. Durch den hohen anfänglichen Deuterium-Partialdruck kann Strahlungsverlusten durch Deuterium-Aufzehrung im Verlaufe des bestimmungsgemäßen Einsatzes der Entladungslampe entgegengewirkt werden, so daß sich eine besonders lange Lebensdauer ergibt. Diese Wirkung ist umso ausgeprägter, je höher der Deuterium-Partialdruckes eingestellt wird. Da mit dem Partialdruck jedoch die erforderliche Zündspannung zunimmt, ergibt sich eine Obergrenze des Deuterium-Partialdruckes von etwa 1 atm (1013 mbar).

Als besonders günstig hat sich erwiesen, die Entladung durch Anlegen einer Hochfrequenz anzuregen. Geeignete Frequenzen dafür liegen bei etwa 500 Hz und darüber. Dadurch erübrigt sich die bei den üblichen Deuteriumlampen zum Zünden erforderliche Glühkathode, so daß die typischen Vorheizzeiten der üblichen Deuteriumlampen entfallen.

Bei einer besonders bevorzugten Ausführungsform der erfindungsgemäßen Entladungslampe weisen die erste und die zweite Elektrode jeweils eine Bohrung auf, die sich bei einer Projektion in Hauptabstrahlrichtung mindestens teilweise überlappen. Diese Ausführungsform erlaubt einen Betrieb als sogenannte Durchscheinlampe. Dabei wird eine Halogenlampe hinter der Deuteriumlampe so angeordnet, daß ihr Licht durch die beiden Bohrungen der Deuteriumlampen-Elektroden fällt. Das kontinuierliche UV-Spektrum der Deuteriumlampe wird somit durch ein kontinuierliches Spektrum der Halogenlampe im sichtbaren Spektralbereich ergänzt.

In einer alternativen und gleichermaßen bevorzugten Ausführungsform der erfindungsgemäßen Entladungslampe wird die Entladung durch Gleichspannung angeregt. Dadurch ergibt sich eine unmodulierte Emission und eine hohe elektromagnetische Verträglichkeit. Darüberhinaus ermöglicht die Gleichspannung den Betrieb der Entladungslampe mit einem relativ einfachen Netzgerät.

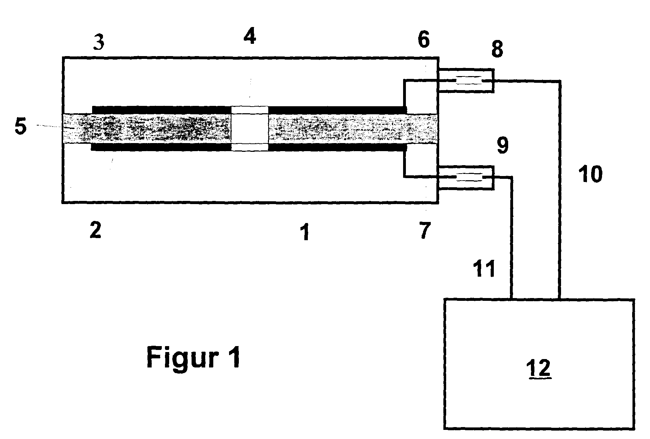

Nachfolgend wird die Erfindung anhand eines Ausführungsbeispiels und einer Zeichnung näher erläutert. In der Zeichnung zeigt die einzige Figur in schematischer Darstellung
- **Figur 1:**: eine Ausführungsform der erfindungsgemäßen Deuteriumlampe.

Bei der Deuteriumlampe gemäß Figur 1 liegen sich innerhalb eines zylindrischen, geschlossenen Lampenkolbens 1 aus Quarzglas eine Anode 2 und eine Mikrohohlkathode 3 gegenüber. Anode 2 und Mikrohohlkathode 3 bestehen jeweils aus einem Molybdänblech, das an den Flachseiten einer Scheibe 5 aus elektrisch isolierendem Werkstoff (Quarz) anliegt. Somit wird durch die Dicke der Quarz-Scheibe 5 der Abstand zwischen Anode 2 und Mikrohohlkathode 3 von 1 mm fest vorgegeben.

Anode 2, Mikrohohlkathode 3 und Quarz-Scheibe 5 sind jeweils mit einer zentralen Bohrung mit einem Bohrungsdurchmesser von 200 µm versehen. Die jeweiligen Bohrungen liegen in Hauptabstrahlrichtung 13 der Deuteriumlampe gesehen unter Bildung einer Durchgangsbohrung 4 koaxial hintereinander. Durch die Durchgangsbohrung 4 kann zusätzlich zu dem von der Mikrohohlkathode 3 emittierten UV-Spektrum das Licht einer Halogenlampe (in der Figur nicht dargestellt) geführt werden, das das UV-Spektrum um ein Spektrum mit sichtbarer Strahlung ergänzt.

Der Lampenkolben 1 hat eine Länge von 1 cm und einen Außendurchmesser von 2 cm. Er ist mit reinem Deuterium mit einem Kaltfülldruck von 200 mbar gefüllt.

Der elektrische Anschluß von Anode 2 und Mikrohohlkathode 3 erfolgt jeweils über eine elektrische Anschlußleitung 6, 7, die über eine in den Lampenkolben 1 vakuumdicht eingeschmolzene Molybdänfolie 8, 9 aus dem Lampenkolben 1 herausgeführt und mit einer Spannungsquelle 12 verbunden sind. Die Spannungsquelle 12 erzeugt eine Gleichspannung von maximal 1 kV, was ein sicheres Zünden der Entladung im Bereich der Mikrohohlkathode 3 gewährleistet. Im Ausführungsbeispiel versorgt die Spannungsquelle 12 die Entladung mit einem Strom von 20 mA bei einer Spannung von 450V, entsprechend einer Leistungsaufnahme von 9 W.

Die in Figur 1 dargestellte Deuteriumlampe zeichnet sich durch kompakte Bauweise und durch lange Lebensdauer aus. Das von der Mikrohohlkathode 3 emittierte UV-Spektrum unterscheidet sich nicht von dem UV-Spektrum konventioneller Deuteriumlampen. Wegen ihres Emissions-Kontinuums im UV-Wellenlängenbereich ist sie für einen universellen Einsatz in einem tragbaren UV-Spektrometer besonders gut geeignet.

## Patentansprüche

1. UV-Entladungslampe, mit einem ein Füllgas enthaltenden Entladungsraum, in dem mit elektrischen Anschlüssen versehen und beabstandet voneinander eine erste und eine zweite Elektrode angeordnet sind, wobei unter Entladungsbedingungen die eine Elektrode als Anode und die andere Elektrode als Mikrohohlkathode wirkt, dadurch gekennzeichnet, daß das Füllgas Deuterium enthält, und daß der Partialdruck des Deuteriums im Füllgas mindestens 40 mbar beträgt.

2. UV-Entladungslampe nach Anspruch 1, dadurch gekennzeichnet, daß als Füllgas Deuterium verwendet wird.

3. UV-Entladungslampe nach Anspruch 1 oder 2, dadurch gekennzeichnet, daß ihre elektrische Leistungsaufnahme 10 Watt oder weniger beträgt.

4. UV-Entladungslampe nach einem der Ansprüche 1 bis 3, dadurch gekennzeichnet, daß der Partialdruck des Deuteriums mindestens 100 mbar beträgt.

5. UV-Entladungslampe nach einem der Ansprüche 1 bis 4, dadurch gekennzeichnet, daß die Entladung durch Hochfrequenz angeregt wird.

6. UV-Entladungslampe nach einem der Ansprüche 1 bis 5, dadurch gekennzeichnet, daß die erste und die zweite Elektrode jeweils eine Bohrung aufweisen, die sich bei einer Projektion in Hauptabstrahlrichtung mindestens teilweise überlappen.

7. UV-Entladungslampe nach einem der Ansprüche 1 bis 4, dadurch gekennzeichnet, daß die Entladung durch Gleichspannung angeregt wird.
